(19) **Europäisches Patentamt / European Patent Office / Office européen des brevets**

(11) **EP 4 191 863 A1**

(12) # EUROPEAN PATENT APPLICATION
published in accordance with Art. 153(4) EPC

(43) Date of publication:
**07.06.2023 Bulletin 2023/23**

(21) Application number: **21849748.5**

(22) Date of filing: **20.07.2021**

(51) International Patent Classification (IPC):
**H02M 7/48** (2007.01)

(52) Cooperative Patent Classification (CPC):
**H02M 7/48**

(86) International application number:
**PCT/JP2021/027226**

(87) International publication number:
**WO 2022/024890 (03.02.2022 Gazette 2022/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.07.2020 JP 2020128210**

(71) Applicant: Hitachi Industrial Equipment Systems Co., Ltd.
**Tokyo 101-0021 (JP)**

(72) Inventors:
• **MATSUMOTO, Daisuke**
  **Tokyo 101-0021 (JP)**
• **TANABE, Keisuke**
  **Tokyo 101-0021 (JP)**
• **HOTTA, Kazushige**
  **Tokyo 101-0021 (JP)**
• **SATO, Fumihiro**
  **Tokyo 101-0021 (JP)**
• **HIRAGA, Masahiro**
  **Tokyo 101-0021 (JP)**

(74) Representative: **MERH-IP Matias Erny Reichl Hoffmann**
**Patentanwälte PartG mbB**
**Paul-Heyse-Strasse 29**
**80336 München (DE)**

(54) **POWER CONVERSION DEVICE AND REMOTE MONITORING SYSTEM**

(57)    Provided are a power conversion device and a remote monitoring system capable of calculating the life of a power semiconductor device with high accuracy. In order to achieve the above purpose, a power conversion device, which controls the flow or interruption of a current with an inverter having a power semiconductor device and performs desired power conversion, comprises: a motor control unit which calculates a gate signal on the basis of a current value, a speed command, and a carrier frequency detected by a current sensor and controls the inverter; a temperature history calculator which estimates the loss of the power semiconductor device and calculates a temperature history; a temperature history storage device which stores the calculation result of the temperature history; and a damage calculator which calculates damage to the power semiconductor device from the temperature history read from the temperature history storage device.

**(Cont. next page)**

# FIG. 1

## Description

TECHNICAL FIELD

The present invention relates to a power conversion device including a power semiconductor device.

BACKGROUND ART

A power conversion device represented by a general-purpose inverter has been widely used as a motor driving unit in a manufacturing device, an elevating device, a transporting device, or the like in industry. In such various applications, the general-purpose inverter is required to be stably operated. In a case where the general-purpose inverter is stopped, production halt of a factory or operation halt of a facility occurs, which is an enormous impact.

The general-purpose inverter controls the flow or the interruption of a current in the power semiconductor device such as an IGBT or a diode, and performs desired power conversion. The power semiconductor device is joined by wire bonding or soldering to a copper foil pattern or the like formed on an insulating substrate, and thus, is electrically connected to a circuit outside the power semiconductor device. The insulating substrate is mounted on a metal base, and the power semiconductor device is cooled through the metal base. As described above, a component in which a power semiconductor device is built in a housing having an electrical connection structure with an external circuit or a cooling structure is referred to as a power module.

When a current flows through the power semiconductor device or interrupted, the power semiconductor device produces heat, and a temperature difference (hereinafter, referred to as $\Delta T$) occurs between a junction and a fin (a metal base having a cooling structure). When the inverter is stopped, heat is not produced, and $\Delta T$ decreases. Since a material having a different thermal expansion coefficient is generally used in the junction (the wire bonding or the junction to the copper foil pattern) of the power semiconductor device, a thermal stress is exerted to the junction, in accordance with the fluctuation of $\Delta T$. In a case where the fluctuation of $\Delta T$ is repeated, peeling or crack occurs in the junction, which causes a failure. A time to cause such a failure is different in accordance with the degree or the frequency of $\Delta T$. The degree or the frequency of $\Delta T$ varies in accordance with the usage of the power conversion device and a device to be driven by the power conversion device. In addition, a load ratio on the IGBT and the diode is different in accordance with a usage condition of the device. Therefore, in order to prevent such a failure, it is necessary to grasp the degree of load on the IGBT and the diode, in accordance with the usage condition of the power conversion device.

As the related art in this technical field, there is Patent Document 1. In Patent Document 1, an electric motor control device is proposed in which a temperature change estimation unit estimates a temperature change of a semiconductor element of a switching circuit, on the basis of an output current signal, an operation frequency signal, and a carrier frequency signal calculated from a current flowing through the semiconductor element, and calculates a temperature change amplitude, a thermal stress calculation unit converts power cycle curve data stored in a power cycle curve data storage unit into a power cycle number corresponding to the temperature change amplitude, and calculates a thermal stress signal, and a life estimation unit estimates the life of the semiconductor element, on the basis of the thermal stress signal, and outputs a life estimation result signal to a display unit.

CITATION LIST

PATENT DOCUMENT

Patent Document 1: WO 2004/082114 A1

SUMMARY OF THE INVENTION

PROBLEMS TO BE SOLVED BY THE INVENTION

In Patent Document 1, the calculation of the temperature change estimation unit, the calculation of the thermal stress calculation unit, and the calculation of the life estimation unit are simultaneously performed. In such a configuration, there is a problem that a great load on the calculation device performing the calculation described above, and the calculation is not performed with high accuracy. In addition, in the specification, a method for calculating the amount of heat production of the semiconductor element as a function of an output current I in Expression (1) is exemplified, but there is a problem that an effective current flowing through a power transistor and a diode is different in accordance with a powering state or a regenerating state, and thus, it is not possible to calculate each loss with high accuracy.

SOLUTIONS TO PROBLEMS

As an example of the present invention, there is a power conversion device that controls a flow or an interruption of a current with an inverter including a power semiconductor device and performs desired power conversion, the device including: a motor control unit calculating a gate signal on the basis of a current value detected by a current sensor, a speed command, and a carrier frequency and controlling the inverter; a temperature history calculator estimating a loss of the power semiconductor device and calculating a temperature history; a temperature history storage device storing a calculation result of the temperature history; and a damage calculator calculating damage to the power semiconductor device from the temperature history read from the temperature history storage device.

EFFECTS OF THE INVENTION

According to the present invention, the life of the power semiconductor device can be calculated with high accuracy.

BRIEF DESCRIPTION OF THE DRAWINGS

Fig. 1 is a configuration diagram of a power conversion device in Example 1.
Fig. 2 is a circuit diagram of an inverter of the power conversion device in Example 1.
Fig. 3 is a perspective view of a power module of the power conversion device in Example 1.
Fig. 4 is a sectional view of the power module of the power conversion device in Example 1.
Fig. 5 is a diagram illustrating a time transition of a direct-current voltage of the power conversion device in Example 1.
Fig. 6 is a diagram illustrating collector-emitter voltage-collector current characteristics of an IGBT of the power conversion device in Example 1.
Fig. 7 is a diagram illustrating monopulse switching loss-collector current characteristics of the IGBT of the power conversion device in Example 1.
Fig. 8 is a diagram illustrating forward voltage-forward current characteristics of a diode of the power conversion device in Example 1.
Fig. 9 is a diagram illustrating monopulse recovery loss-forward current characteristics of the IGBT of the power conversion device in Example 1.
Fig. 10 is a diagram illustrating thermal impedance-time characteristics of the IGBT of the power conversion device in Example 1.
Fig. 11 is a diagram illustrating thermal impedance-time characteristics of the diode of the power conversion device in Example 1.
Fig. 12 is a diagram illustrating a calculation result example of a temperature history of the power conversion device in Example 1.
Fig. 13 is a diagram illustrating a reversal point of the temperature history of the power conversion device in Example 1.
Fig. 14 is a diagram illustrating life cycle-Tjc characteristics of a power semiconductor element of the power conversion device in Example 1.
Fig. 15 is a diagram describing a method for comparing a life calculation result of the power conversion device in Example 1 with a reference value.
Fig. 16 is a diagram illustrating life display of the life calculation result of the power conversion device in Example 1.
Fig. 17 is a diagram illustrating alarming display of the life calculation result of the power conversion device in Example 1.
Fig. 18 is a configuration diagram of a remote monitoring system including a power conversion device in Example 2.
Fig. 19 is an image diagram of the remote monitoring system in which a plurality of power conversion devices are connected to a monitoring device through a communication network in Example 2.
Fig. 20 is a configuration diagram of a power conversion device in Example 3.

MODE FOR CARRYING OUT THE INVENTION

Hereinafter, examples of the present invention will be described by using the drawings.

Example 1

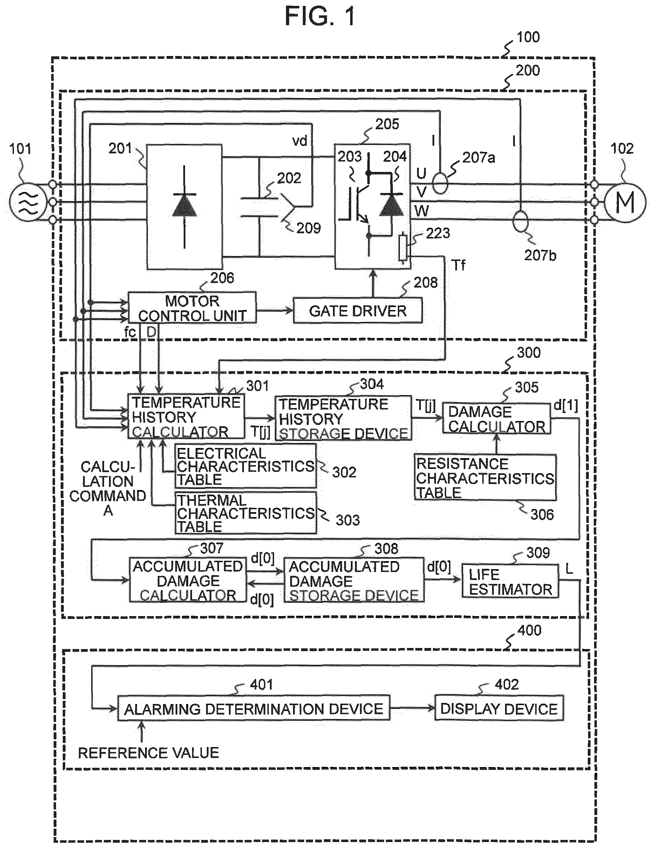

Fig. 1 is a configuration diagram of a power conversion device in this example. In Fig. 1, a power conversion device 100 includes a main circuit 200, a life estimation device 300, and an interface device 400.

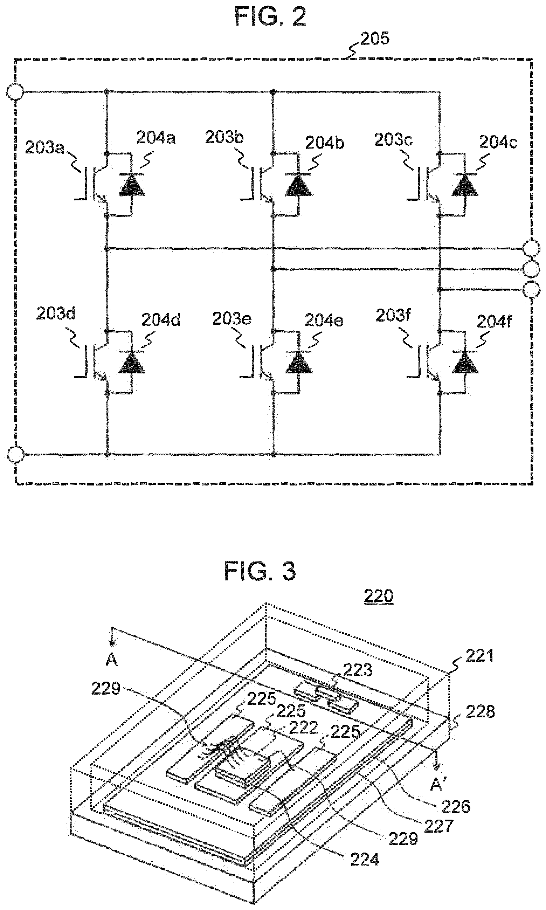

First, the main circuit 200 will be described. The main circuit 200 includes a diode rectifier 201 rectifying alternating-current power that is transmitted from an alternating-current source 101, a smoothing capacitor 202, and an inverter 205 including an IGBT 203 that is a power semiconductor switching element and a diode 204 connected to the IGBT 203 in inverse-parallel. In this example, the inverter 205 will be described as a three-phase two-level inverter illustrated in Fig. 2.

The inverter 205 is controlled by a motor control unit 206. Specifically, the motor control unit 206 calculates a gate signal with a current value detected by current sensors 207a and 207b, a speed command, and a carrier frequency fc that is set. The calculated gate signal is amplified by a gate driver 208, and is input to the IGBT 203 (a, b, c, d, e, and f) as a gate voltage. A ratio of a gate-on period to a carrier cycle will be referred to as an on-duty D. Accordingly, a voltage is output such that the motor 102 is at the speed according to the command. In both of the IGBT 203 and the diode 204, a junction temperature increases due to a joule loss in an on state, and a switching loss and a recovery loss when switching between a flow and an interruption, and the junction temperature decreases in an off state.

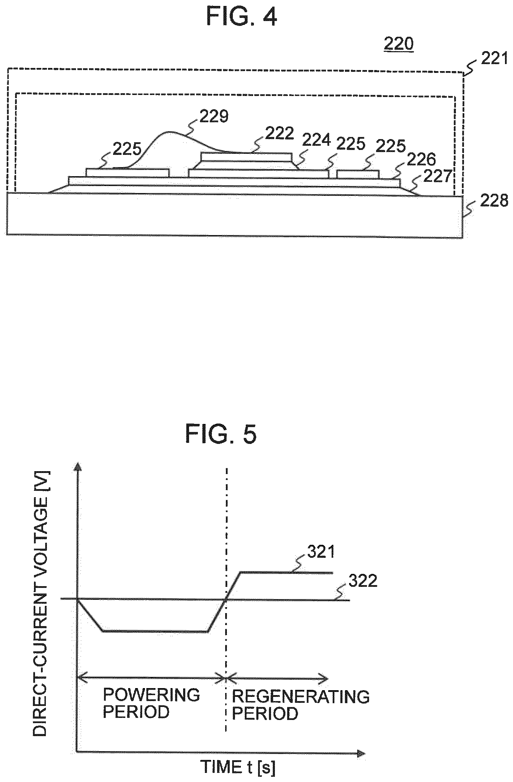

Fig. 3 illustrates a perspective view of a power module 220 in which the IGBT 203 and the diode 204 are built, and Fig. 4 illustrates a sectional view of A-A' in Fig. 3.

In Fig. 3, in a housing 221, a plurality of power semiconductor elements 222 such as the IGBT 203 and the diode 204, and a temperature sensor 223 are arranged on the surface (in Fig. 3 and Fig. 4, only one semiconductor element is clearly specified).

In Fig. 4, in the power module 220, the power semiconductor element 222, a solder 224 under a chip, copper foil 225, an insulating substrate 226, a solder 227 under a substrate, and a metal base 228 are stacked in this order, and the solder 224 under a chip and the solder 227 under a substrate join the adjacent layers. The other surface of the semiconductor element is joined to a metal wire 229.

Since the power semiconductor element 222 is joined with a material having a different thermal expansion coefficient, a stress is exerted to the junction when the temperature of the power semiconductor element increases and decreases. A resistance to the stress will be referred to as a power cycle resistance, and is indicated by the number of repetitions available for a predetermined temperature amplitude that is referred to as a life cycle. Therefore, in a case where a temperature history of the semiconductor element is known, it is possible to estimate the life.

Next, the life estimation device 300 will be described. In Fig. 1, in the life estimation device 300 in this example, the temperature history calculator 301 estimates the loss of the semiconductor element of each of the IGBT and the diode from the carrier frequency fc and the on-duty D obtained from the motor control unit 206, a direct-current voltage Vd detected by the voltage sensor 209, a current I detected by the current sensor 207, and a thermal characteristics table 303 and an electrical characteristics table 302 of the IGBT and the diode, with a calculation command A as a trigger. Hereinafter, the details will be described.

First, for example, as illustrated in Fig. 5, a case where a direct-current voltage 321 is less than a reference voltage 322 is determined as powering, and a case where the direct-current voltage is greater than the reference voltage is determined as regenerating. Alternatively, a motor power factor is estimated from control information of the motor control unit, and the powering and the regenerating are determined. Then, when a current is in a positive direction, a loss Pq of an IGBT of an upper arm, for example, is calculated by Expression (1) described below when powering, and is calculated by Expression (2) described below when regenerating.

[Expression 1]

$$P_{\mathrm{q}} = ID\left(r_{\mathrm{q}}I + v_{\mathrm{q}}\right) + \left(a_{\mathrm{q}}I + b_{\mathrm{q}}\right)f_{\mathrm{C}}\frac{v_{\mathrm{d}}}{v_{\mathrm{db}}} \quad \cdots (1)$$

[Expression 2]

$$P_{\mathrm{q}} = I(1 - D)\left(r_{\mathrm{q}}I + v_{\mathrm{q}}\right) + \left(a_{\mathrm{q}}I + b_{\mathrm{q}}\right)f_{\mathrm{C}}\frac{v_{\mathrm{d}}}{v_{\mathrm{db}}} \quad \cdots (2)$$

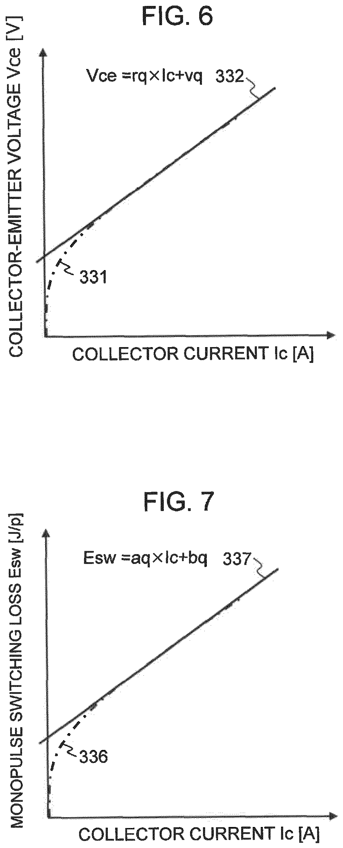

Here, $r_{\mathrm{q}}$ and $v_{\mathrm{q}}$ are the slope and the intercept of a linear approximation curve 332 of collector-emitter voltage-collector current characteristics 331 of the IGBT illustrated in Fig. 6. In addition, $a_{\mathrm{q}}$ and $b_{\mathrm{q}}$ are the slope and the intercept of a linear approximation curve 337 of switching loss-collector current characteristics 336 per a monopulse of the IGBT when the direct-current voltage is $v_{\mathrm{db}}$, illustrated in Fig. 7. In Fig. 1, such variables are stored in the electrical characteristics table 302.

In addition, when a current is in the positive direction, a loss Pd of a diode of a lower arm, for example, is calculated by Expression (3) described below when powering, and is calculated by Expression (4) described below when regenerating.

[Expression 3]

$$P_{\mathrm{d}} = I(1 - D)(r_{\mathrm{d}}I + v_{\mathrm{d}}) + (a_{\mathrm{d}}I + b_{\mathrm{d}})f_{\mathrm{C}}\frac{v_{\mathrm{d}}}{v_{\mathrm{db}}} \quad \cdots (3)$$

[Expression 4]

$$P_{\mathrm{d}} = ID(r_{\mathrm{d}}I + v_{\mathrm{d}}) + (a_{\mathrm{d}}I + b_{\mathrm{d}})f_{\mathrm{C}}\frac{v_{\mathrm{d}}}{v_{\mathrm{db}}} \quad \cdots (4)$$

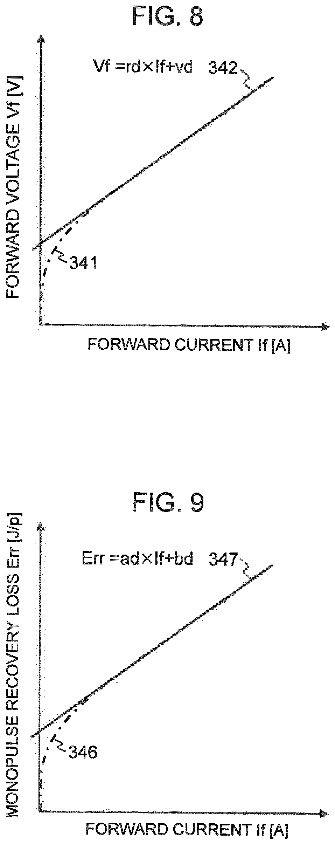

Here, rd and vd are the slope and the intercept of a linear approximation curve 342 of forward voltage-forward current characteristics 341 of the diode illustrated in Fig. 8. In addition, ad and bd are the slope and the intercept of a linear approximation curve 347 of recovery loss-forward current characteristics 346 per a monopulse of the diode when the direct-current voltage is vdb, illustrated in Fig. 9. In Fig. 1, such variables are stored in the electrical characteristics table 302.

Next, the temperature history of the semiconductor element of each of the IGBT and the diode is calculated. Hereinafter, the details will be described.

First, a temperature difference ΔTq between a junction and a fin of the IGBT, for example, is calculated by Expression (5) described below.

[Expression 5]

$$\Delta T_{\mathrm{q}}[j] = \frac{\Delta t}{\tau_{\mathrm{thq}} + \Delta t}r_{\mathrm{thq}}P_{\mathrm{q}} + \frac{\tau_{\mathrm{thq}}}{\tau_{\mathrm{thq}} + \Delta t}\Delta T_{\mathrm{q}}[j - 1] \quad \cdots (5)$$

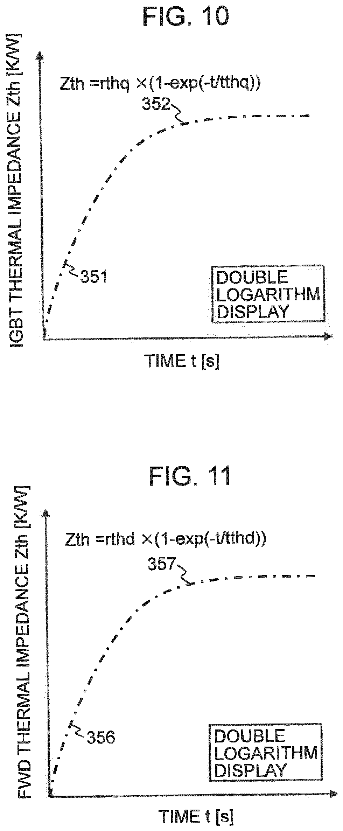

Here, τthq and rthq are the variables of an approximation curve 352 of thermal impedance-time characteristics 351 of the IGBT illustrated in Fig. 10. In Fig. 1, such variables are stored in the thermal characteristics table 303.

The calculation of the loss Pq and the calculation of ΔTq are performed at a cycle of Δt that can be arbitrarily set, and i-th ΔTq is ΔTq[i] . In Fig. 1, a calculation result of ΔTq[i] is transmitted to a temperature history storage device 304 and is stored. In the calculation of Expression (5), ΔTq[i-1] is read from the temperature history storage device 304.

ΔTq[0] can be set to an arbitrary value that is suitable for a timing when the calculation command A is issued. For example, in a case where it is determined that a stop time of the inverter is sufficiently greater than τthq, the calculation can be performed with higher accuracy by setting Tq[0] to 0. In addition, calculation accuracy of the temperature history can be improved by setting Δt to be small. In order to obtain constant accuracy, it is preferable that Δt is set to be less than 1/10 of a thermal time constant of the power module. On the other hand, in a case where Δt is set to be large, a data amount of the temperature history per unit time can be reduced, and thus, there is an advantage that it is possible to save storage capacity and to store the temperature history for a longer period of time.

Next, a temperature difference ΔTd between a junction and a fin of the diode, for example, is calculated by Expression (6) .

[Expression 6]

$$\Delta T_{\mathrm{d}}[j] = \frac{\Delta t}{\tau_{\mathrm{thd}} + \Delta t}r_{\mathrm{thd}}P_{\mathrm{d}} + \frac{\tau_{\mathrm{thd}}}{\tau_{\mathrm{thd}} + \Delta t}\Delta T_{\mathrm{d}}[j - 1] \quad \cdots (6)$$

Here, τthd and rthd are the variables of an approximation curve 357 of thermal impedance-time characteristics 356 of the diode illustrated in Fig. 11. In Fig. 1, such variables are stored in the thermal characteristics table 303.

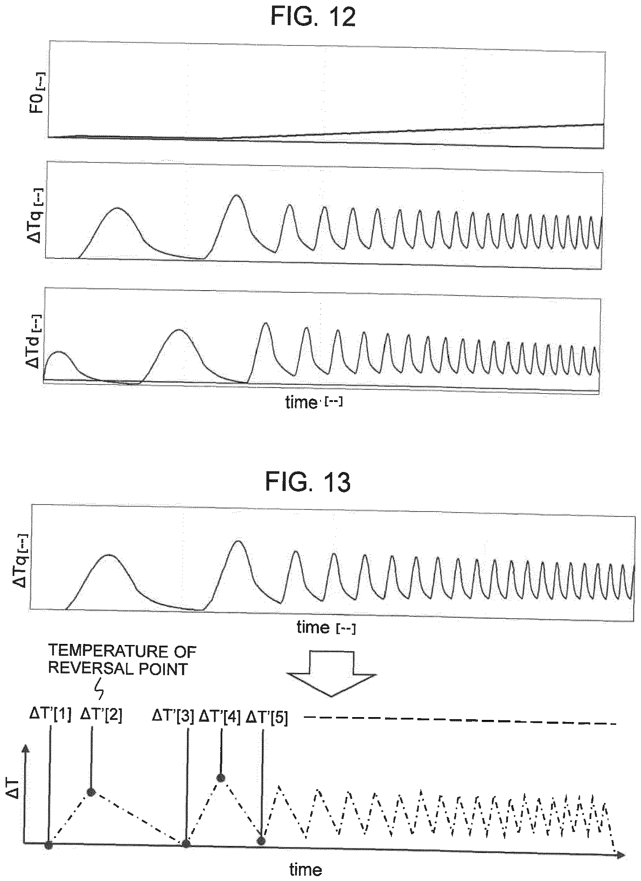

An example of the calculation result of the temperature history of the IGBT of the upper arm and the diode in a powering and accelerating operation is illustrated in Fig. 12. Fig. 12 illustrates the waveform of an output frequency f0 of the motor control unit 206 in Fig. 1, and then, the waveforms of ΔTq and ΔTd that are the calculation result, in order from the top. In this example, ΔTq is maximized at the second peak, and ΔTd is maximized at the third peak. By storing the temperature history, it is possible to detect a temperature peak at which damage is maximized, which is important to highaccurate life prediction.

Next, processing of estimating a deterioration degree (the damage) by using the temperature history will be described. Note that, hereinafter, discrimination between the IGBT and diode will be omitted. A damage calculator 305 illustrated in Fig. 1 reads the temperature history from the temperature history storage device 304, and extracts a minimum point and a maximum point of ΔT (hereinafter, the minimum point and the maximum point will be collectively referred to as a reversal point), as illustrated in Fig. 13. The number of times in which an amplitude R of ΔT" occurs is counted from an array ΔT' of the extracted reversal point by a counting method such as a rainflow counting method. From a result thereof, damage d[1] of the entire temperature history, for example, is calculated by Expression (7).
[Expression 7]

$$d[1] = \sum_{j=1}^{k} n[j] \frac{1}{10^{b_{lx}} R[j]^{a_{lx}}} \quad \cdots (7)$$

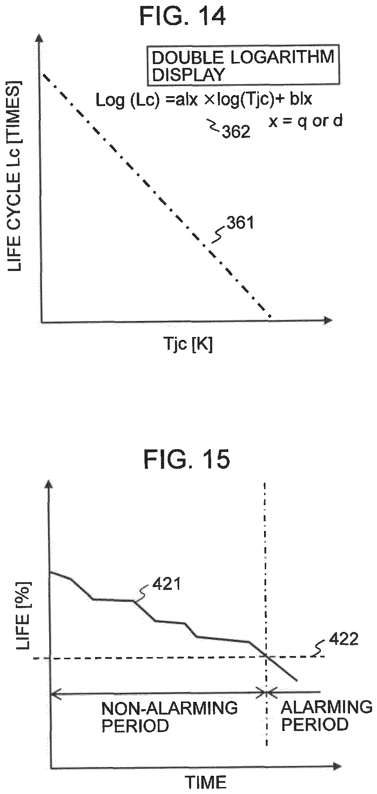

Here, R[j] is j-th R, and n[j] indicates the number of times in which R[j] occurs. alx and blx are a coefficient of an approximation curve 362 of a life cycle-Tjc characteristics curve 361 illustrated in Fig. 14, and are stored in a resistance characteristics table 306 in Fig. 1.

In this example, a coefficient in the case of performing linear approximation with respect to a resistance characteristics curve will be described as an example, and approximation may be performed by other methods, or characteristics may be tabulated. Processing of extracting the reversal point may be performed by the temperature history calculator 301. In a case where this processing is performed by the temperature history calculator 301, it is not necessary to store information other than the reversal point, and thus, it is possible to reduce a storage amount.

This calculation result d[1] is transmitted to an accumulated damage calculator 307 illustrated in Fig. 1, and is added to accumulated damage d[0] read from an accumulated damage storage device 308 in the past. That is, new accumulated damage d[0] is calculated by Expression (8).
[Expression 8]

$$d[0] = d[0] + d[1] \quad \cdots (8)$$

d[0] is initially 0, increases as the damage is accumulated, and reaches 1, which is determined as the end of life.

This calculation result d[0] is transmitted to the accumulated damage storage device 308, and is stored. Then, d[0] is transmitted to a life estimator 309 from the accumulated damage storage device 308, and life L is calculated by Expression (9).
[Expression 9]

$$L = 100(1 - d[0]) \quad \cdots (9)$$

L is initially 100, decreases as the damage is accumulated, and reaches 0, which is determined as the end of life.

According to the configuration described above, the life estimation device 300 is capable of calculating the life according to a power cycle of the IGBT 203 and the diode 204.

Note that, it is necessary to obtain processing of estimating the loss and processing of calculating the temperature history from an instant current and control information when operating the inverter. On the other hand, the temperature history is stored in the storage device, and thus, the calculation of the damage may be performed when there is available capacity in processing capacity of the inverter. For example, in order to smooth a calculation load, the processing may be performed during the waiting of an inverter in which PWM is not calculated and a load on a calculation device is small. Alternatively, the calculation of the damage may be performed once while processing of calculating a temperature is performed a plurality of times.

Next, the interface device 400 will be described. In Fig. 1, the life estimator 309 transmits a life estimation result 421 to an alarming determination device 401.

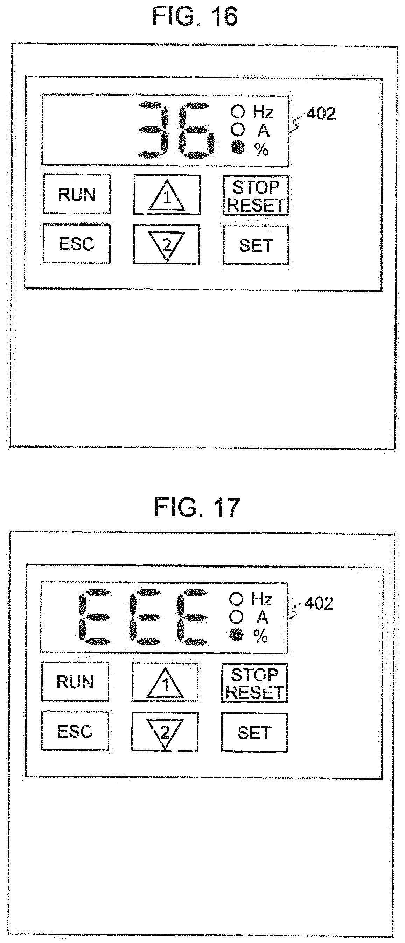

Fig. 15 is a diagram illustrating a method for comparing a life calculation result of the power conversion device in this example with a reference value. In Fig. 15, the alarming determination device 401 compares a life estimation result 421 with a reference value 422 that can be arbitrarily set. A case where the life estimation result 421 is the reference value 422 or more is referred to as a non-alarming period, and a case where the life estimation result 421 is less than the reference value 422 is referred to as an alarming period. In the non-alarming period, the life estimation result is transmitted to a display device 402 in Fig. 1, and for example, is clearly specified such that the life is known, as illustrated in Fig. 16. In Fig. 16, the display device 402 displays that the remaining life is 36%.

In addition, in the alarming period, as illustrated in Fig. 17, the display device displays that it is less than the reference value and is different from a normal state such that a user grasps the state. In Fig. 17, in a case where the life estimation result is less than the reference value, "EEE" is displayed on the display device 402.

As described above, by clearly specifying the life and the alarming, for example, it is possible to replace the power module before reaching the end of life, to extend the life of the power module by degeneration such as an increase in an acceleration and deceleration time of the inverter, to consider the prevention of an unexpected failure, and to prevent the unexpected failure.

As described above, according to this example, it is possible to calculate the life of the IGBT and the diode with high accuracy. In addition, by clearly specifying the life and the alarming, it is possible to prevent the unexpected failure.

Example 2

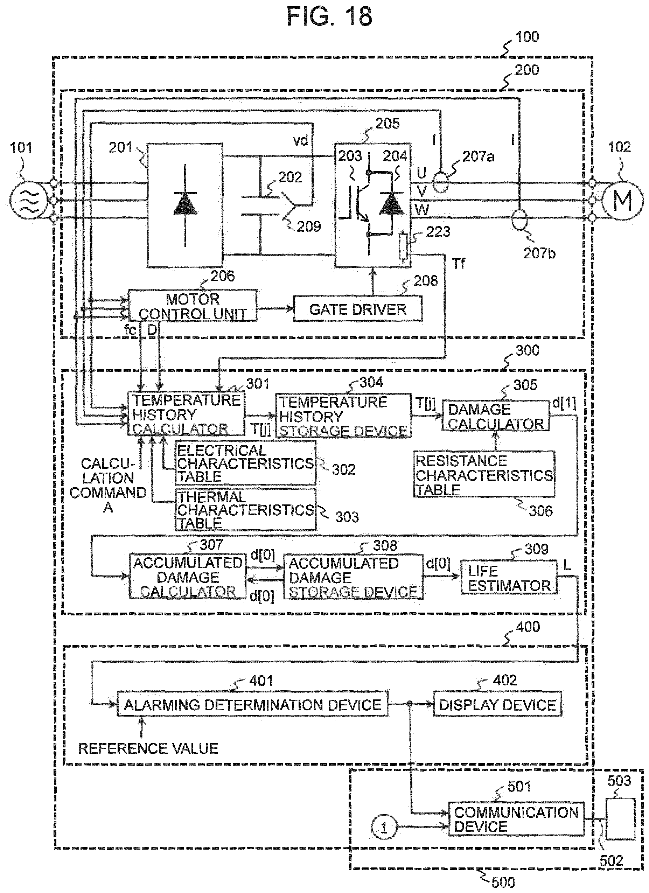

Fig. 18 is a configuration diagram of a remote monitoring system including a power conversion device in this example. In Fig. 18, the same reference numerals will be applied to the same configurations as those in Fig. 1, and the description thereof will be omitted. Fig. 18 is different from Fig. 1 in that the power conversion device 100 includes a communication device 501 in addition to the configuration of Fig. 1, and is connected to a monitoring device 503 monitoring a plurality of power conversion devices through a communication network 502.

In Fig. 18, the temperature history calculator 301 transmits the calculation result of the temperature history and an alarming determination result to the communication device 501. The communication device 501 transmits such information to the monitoring device 503 through the communication network 502.

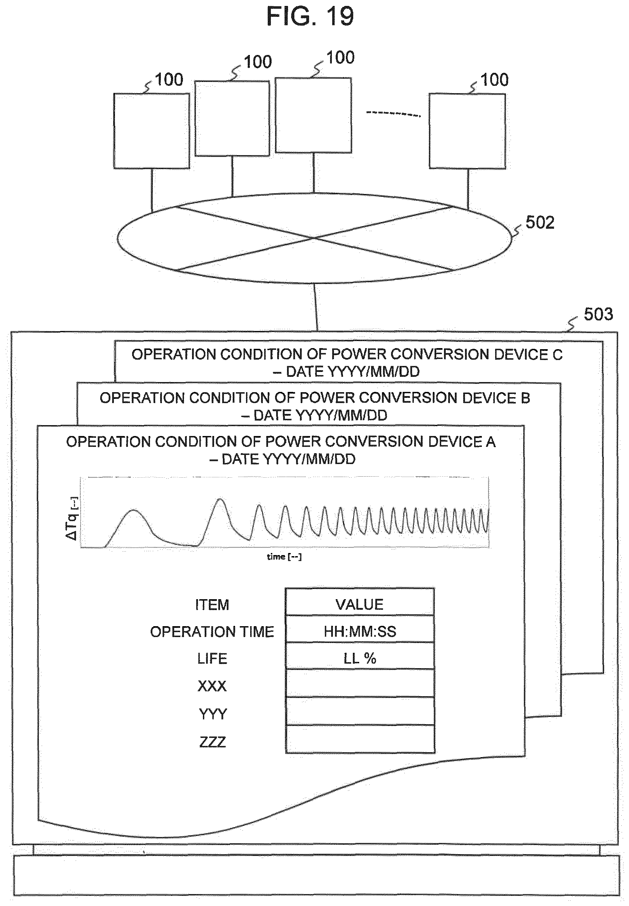

Fig. 19 is an image diagram of the remote monitoring system in which the plurality of power conversion devices are connected to the monitoring device through the communication network in this example. In Fig. 19, each of the power conversion devices 100 is connected to the communication network 502 through the communication device 501. In addition, the monitoring device 503 is connected to the communication network 502, and monitors the plurality of power conversion devices 100.

According to the configuration described above, it is possible to monitor the plurality of power conversion devices 100 with the monitoring device 503. Further, by mounting a display unit such as a detailed display or a high-performance calculation device on the monitoring device 503, comprehensive management and analysis such as the comparison between operation conditions of the plurality of power conversion devices 100, and the detection of an abnormal operation is available. For example, the daily operation condition can be managed even at a location such as an office that is separated from the power conversion device, and management work can be efficiently performed. Further, by accumulating the data, it is possible to sequentially update information required for preparing a maintenance schedule or an operation schedule. In addition, when an abnormity occurs, the objective operation condition can be shared in the interested department, and thus, a downtime can be reduced.

Example 3

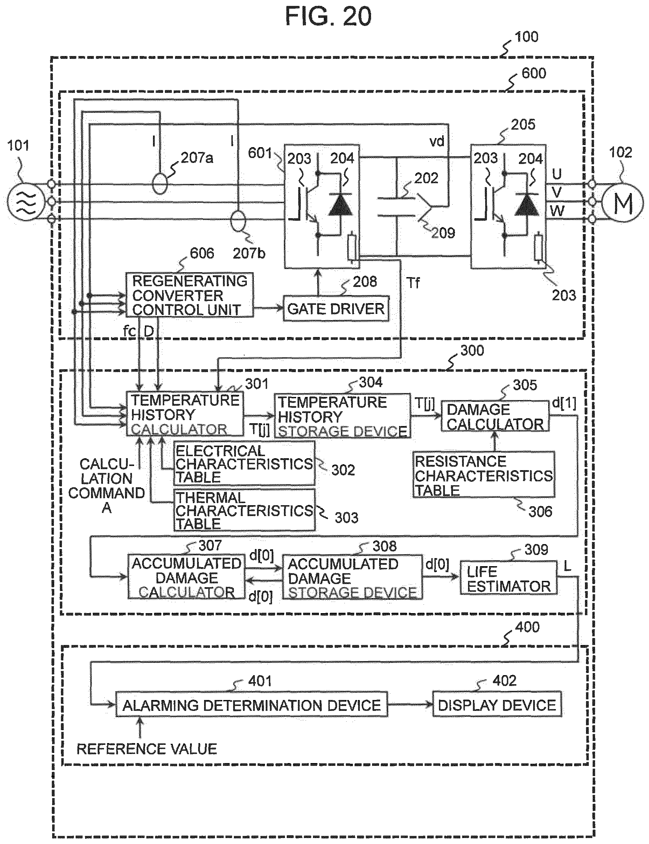

In this example, a power conversion device using a regenerating converter will be described. Fig. 20 is a configuration diagram of a power conversion device in this example. In Fig. 20, the same reference numerals will be applied to the same configurations as those in Fig. 1, and the description thereof will be omitted. Fig. 20 is different from Fig. 1 in that a main circuit 600 using a regenerating converter is provided.

In Fig. 20, the main circuit 600 includes a regenerating converter 601 including the IGBT 203 that is the power semiconductor switching element, and the diode 204 connected to the IGBT in inverse-parallel, instead of the diode rectifier 201 in Fig. 1. In addition, the main circuit includes a regenerating converter control unit 606. The regenerating converter 601 is capable of adjusting a power factor of input power in accordance with the switching of the IGBT 203, and thus, there is an advantage that the fluctuation of a direct-current voltage can be suppressed.

Examples have been described, but the present invention is not limited to Examples described above, and includes various modification examples. For example, Examples described above have been described in detail in order to explain the present invention in an understandable manner, and are not necessarily limited to having all the configurations described. In addition, it is possible to add, delete, or replace a part of the configuration of each of Examples with another configuration. In addition, a part or all of the configurations and the functions described above may be attained by software in which a processor interprets and executes a program for attaining each of the functions, or may be attained by hardware, for example, by designing an integrated circuit.

REFERENCE SIGNS LIST

| | |
|---|---|
| 100 | Power conversion device |
| 101 | Alternating-current source |
| 102 | Motor |
| 200 | Main circuit |
| 201 | Diode rectifier |
| 202 | Smoothing capacitor |
| 203 | IGBT |
| 204 | Diode |
| 205 | Inverter |
| 206 | Motor control unit |
| 207 | Current sensor |
| 208 | Gate driver |
| 220 | Power module |
| 221 | Housing |
| 222 | Power semiconductor element |
| 223 | Temperature sensor |
| 300 | Life estimation device |
| 301 | Temperature history calculator |
| 302 | Electrical characteristics table |
| 303 | Thermal characteristics table |
| 304 | Temperature history storage device |
| 305 | Damage calculator |
| 306 | Resistance characteristics table |
| 307 | Accumulated damage calculator |
| 308 | Accumulated damage storage device |
| 309 | Life estimator |
| 321 | Direct-current voltage |
| 322 | Reference voltage |
| 400 | Interface device |
| 401 | Alarming determination device |
| 402 | Display device |
| 421 | Life estimation result |
| 422 | Reference value |
| 501 | Communication device |
| 502 | Communication network |
| 503 | Monitoring device |
| 601 | Regenerating converter |

**Claims**

1. A power conversion device that controls a flow or an interruption of a current with an inverter including a power semiconductor device and performs desired power conversion, the device comprising:

   a motor control unit calculating a gate signal on the basis of a current value detected by a current sensor, a speed command, and a carrier frequency and controlling the inverter;
   a temperature history calculator estimating a loss of the power semiconductor device and calculating a temperature history;
   a temperature history storage device storing a calculation result of the temperature history; and
   a damage calculator calculating damage to the power semiconductor device from the temperature history read from the temperature history storage device.

2. The power conversion device according to claim 1,
   wherein the temperature history calculator estimates the loss of the power semiconductor device by the carrier frequency, an on-duty, a direct-current voltage, the current, and electrical characteristics of the power semiconductor device, and calculates the temperature history of the power semiconductor device by the estimated loss and thermal characteristics of the power semiconductor device.

3. The power conversion device according to claim 1,

wherein processing of the temperature history calculator is performed when operating the inverter, and processing of the damage calculator is performed when there is available capacity in processing capacity of the inverter.

4. The power conversion device according to claim 2,

wherein the power semiconductor device is an IGBT and a diode,
the temperature history calculator individually calculates a temperature history of the IGBT and the diode, and
the damage calculator individually calculates damage to the IGBT and the diode.

5. The power conversion device according to claim 2,

wherein the temperature history calculator estimates powering information and regenerating information of the inverter from monitoring of the direct-current voltage,
individually estimates the loss of the power semiconductor device when powering and when regenerating by the powering information and the regenerating information, and
individually calculates the temperature history of the power semiconductor device when powering and when regenerating by the estimated loss and the thermal characteristics of the power semiconductor device.

6. The power conversion device according to claim 2,

wherein the temperature history calculator estimates powering information and regenerating information of the inverter from monitoring of a power factor,
individually estimates the loss of the power semiconductor device when powering and when regenerating by the powering information and the regenerating information, and
individually calculates the temperature history of the power semiconductor device when powering and when regenerating by the estimated loss and the thermal characteristics of the power semiconductor device.

7. The power conversion device according to claim 1, further comprising:

an accumulated damage calculator accumulating a damage result of the power semiconductor device calculated by the damage calculator;
an accumulated damage storage device storing the accumulated damage result; and
a life estimator estimating life of the power semiconductor device from the accumulated damage result read from the accumulated damage storage device.

8. The power conversion device according to claim 7, further comprising
an alarming determination device comparing a life estimation result from the life estimator with a reference value, when the life estimation result is the reference value or more, displaying the life estimation result on a display device as a non-alarming period, and when the life estimation result is less than the reference value, displaying that it is less than the reference value and different from a normal state on the display device as an alarming period.

9. A remote monitoring system comprising the power conversion device according to claim 8,

wherein the power conversion device includes a communication device and is connected to a monitoring device monitoring the power conversion device through a communication network, and
the power conversion device transmits a temperature history calculation result of the temperature history calculator and an alarming determination result of the alarming determination device to the communication device, and the communication device transmits the temperature history calculation result and the alarming determination result to the monitoring device through the communication network.

# FIG. 1

# FIG. 2

# FIG. 3

# FIG. 4

# FIG. 5

# FIG. 6

Vce =rq×Ic+vq  332

331

COLLECTOR-EMITTER VOLTAGE Vce [V]

COLLECTOR CURRENT Ic [A]

# FIG. 7

Esw =aq×Ic+bq  337

336

MONOPULSE SWITCHING LOSS Esw [J/p]

COLLECTOR CURRENT Ic [A]

# FIG. 8

FORWARD VOLTAGE Vf [V]

$Vf = rd \times If + vd$   342

341

FORWARD CURRENT If [A]

# FIG. 9

MONOPULSE RECOVERY LOSS Err [J/p]

$Err = ad \times If + bd$   347

346

FORWARD CURRENT If [A]

# FIG. 10

$Zth = rthq \times (1-\exp(-t/tthq))$

IGBT THERMAL IMPEDANCE Zth [K/W]

TIME t [s]

352

351

DOUBLE
LOGARITHM
DISPLAY

# FIG. 11

$Zth = rthd \times (1-\exp(-t/tthd))$

FWD THERMAL IMPEDANCE Zth [K/W]

TIME t [s]

357

356

DOUBLE
LOGARITHM
DISPLAY

## FIG. 12

## FIG. 13

TEMPERATURE OF
REVERSAL POINT

$\Delta T'[1]$ $\Delta T'[2]$   $\Delta T'[3]$ $\Delta T'[4]$ $\Delta T'[5]$

# FIG. 14

DOUBLE LOGARITHM DISPLAY

$Log\,(Lc) = alx \times log(Tjc) + blx$

$x = q\ or\ d$

362

361

LIFE CYCLE Lc [TIMES]

Tjc [K]

# FIG. 15

421

422

LIFE [%]

NON-ALARMING PERIOD

ALARMING PERIOD

TIME

## FIG. 16

```
┌─────────────────────────────────────┐
│  ┌───────────────────────────────┐  │
│  │  ┌─────────────────────────┐  │  │
│  │  │   ┌─┐ ┌─┐   ○ Hz  ⌐402  │  │  │
│  │  │   ╵─╵ ┌─╵ • ○ A        │  │  │
│  │  │   └─┘ └─┘   ● %        │  │  │
│  │  └─────────────────────────┘  │  │
│  │  ┌─────┐  ┌─────┐  ┌─────┐   │  │
│  │  │ RUN │  │ /1\ │  │STOP │   │  │
│  │  └─────┘  └─────┘  │RESET│   │  │
│  │  ┌─────┐  ┌─────┐  └─────┘   │  │
│  │  │ ESC │  │ \2/ │  ┌─────┐   │  │
│  │  └─────┘  └─────┘  │ SET │   │  │
│  │                    └─────┘   │  │
│  └───────────────────────────────┘  │
│                                     │
└─────────────────────────────────────┘
```

## FIG. 17

```
┌─────────────────────────────────────┐
│  ┌───────────────────────────────┐  │
│  │  ┌─────────────────────────┐  │  │
│  │  │  ┌─ ┌─ ┌─   ○ Hz  ⌐402  │  │  │
│  │  │  ├─ ├─ ├─    ○ A        │  │  │
│  │  │  └─ └─ └─   ● %        │  │  │
│  │  └─────────────────────────┘  │  │
│  │  ┌─────┐  ┌─────┐  ┌─────┐   │  │
│  │  │ RUN │  │ /1\ │  │STOP │   │  │
│  │  └─────┘  └─────┘  │RESET│   │  │
│  │  ┌─────┐  ┌─────┐  └─────┘   │  │
│  │  │ ESC │  │ \2/ │  ┌─────┐   │  │
│  │  └─────┘  └─────┘  │ SET │   │  │
│  │                    └─────┘   │  │
│  └───────────────────────────────┘  │
│                                     │
└─────────────────────────────────────┘
```

# FIG. 18

# FIG. 19

OPERATION CONDITION OF POWER CONVERSION DEVICE C
– DATE YYYY/MM/DD

OPERATION CONDITION OF POWER CONVERSION DEVICE B
– DATE YYYY/MM/DD

OPERATION CONDITION OF POWER CONVERSION DEVICE A
– DATE YYYY/MM/DD

| ITEM | VALUE |
|---|---|
| OPERATION TIME | HH:MM:SS |
| LIFE | LL % |
| XXX | |
| YYY | |
| ZZZ | |

# FIG. 20

## INTERNATIONAL SEARCH REPORT

| International application No. |
| --- |
| **PCT/JP2021/027226** |

### A. CLASSIFICATION OF SUBJECT MATTER

*H02M 7/48*(2007.01)i
FI: H02M7/48 M

According to International Patent Classification (IPC) or to both national classification and IPC

### B. FIELDS SEARCHED

Minimum documentation searched (classification system followed by classification symbols)

H02M 7/42-7/98

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2012-10490 A (HITACHI, LTD.) 12 January 2012 (2012-01-12) paragraphs [0014]-[0082], fig. 1-11 | 1 |
| Y | paragraphs [0014]-[0082], fig. 1-11 | 2, 4 |
| A | entire text, all drawings | 3, 5-9 |
| Y | JP 2011-97812 A (TOSHIBA CORP.) 12 May 2011 (2011-05-12) paragraphs [0027]-[0029], formulas (2), (3) | 2, 4 |
| A | entire text, all drawings | 1, 3, 5-9 |
| A | JP 2008-131722 A (NIPPON RELIANCE KK) 05 June 2008 (2008-06-05) entire text, all drawings | 1-9 |
| A | JP 2015-114202 A (SHINDENGEN ELECTRIC MANUFACTURING) 22 June 2015 (2015-06-22) entire text, all drawings | 1-9 |
| A | JP 2005-269832 A (NISSAN MOTOR) 29 September 2005 (2005-09-29) entire text, all drawings | 1-9 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **22 September 2021** | **05 October 2021** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2021/027226**

| Patent document cited in search report | | | Publication date (day/month/year) | Patent family member(s) | Publication date (day/month/year) |
|---|---|---|---|---|---|
| JP | 2012-10490 | A | 12 January 2012 | US 2013/0119912 A1 paragraphs [0034]-[0086], fig. 1-11 | |
| JP | 2011-97812 | A | 12 May 2011 | US 2012/0217795 A1 paragraphs [0036]-[0037], formulas (2), (3) | |
| JP | 2008-131722 | A | 05 June 2008 | (Family: none) | |
| JP | 2015-114202 | A | 22 June 2015 | US 2015/0160074 A1 entire text, all drawings | |
| JP | 2005-269832 | A | 29 September 2005 | US 2005/0204761 A1 entire text, all drawings | |

Form PCT/ISA/210 (patent family annex) (January 2015)

**EP 4 191 863 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2004082114 A1